# EUROPÄISCHE PATENTSCHRIFT

(11) **EP 1 930 192 B1**
(45) Veröffentlichungstag und Bekanntmachung des Hinweises auf die Patenterteilung: **24.11.2010**
(21) Anmeldenummer: 07023328.3
(22) Anmeldetag: 03.12.2007
(51) Int. Cl.: B60H 1/00

(54) **Schallgedämpftes, gasführendes Bauteil**
Noise-reduced, gas-bearing component
Composant conduisant de gaz à son réduit

(30) Priorität: 06.12.2006 DE 102006057823
(43) Veröffentlichungstag der Anmeldung: 11.06.2008
(73) Patentinhaber: Behr GmbH & Co. KG, 70469 Stuttgart (DE)
(72) Erfinder: Paul, Michael, 74343 Sachsenheim (DE)

(56) Entgegenhaltungen:
- EP-A- 1 431 084
- DE-A1- 10 337 605
- DE-B3- 10 261 081
- FR-A- 2 876 172
- GB-A- 984 817
- US-B1- 6 178 764

## Beschreibung

Die Erfindung betrifft ein schallgedämpftes, gasführendes Bauteil gemäß dem Oberbegriff des Anspruches 1.

Aus der US 6,178,764 B1 ist eine Kraftfahrzeug-Klimaanlage mit einer Schalldämpfung des Frequenzbereichs von ca. 1 kHz bis 2 kHz bekannt. Hierbei ist wenigstens ein Element aus einem schallabsorbierenden Material in Bereichen angeordnet, welche sich von einem Umlenkbereich eines Luftweges aus erstrecken, in dem Luft unter Druck von einem Gebläse strömt und die Richtung in Richtung eines Wärmetauschers ändert. Hierbei weist das Gehäuse Öffnungen auf, die von außen durch das schallabsorbierende Material verdeckt sind. Gemäß einer bevorzugten Ausführungsform wird ein Ausströmen von Luft durch das schallabsorbierende Material dadurch verhindert, dass den Luftaustritt verhindernde Mittel vorgesehen sind. Gemäß einer weiteren, bevorzugten Ausführungsform sind auch Mittel zum Abdichten des schallabsorbierenden Materials gegenüber Wasser vorgesehen. Die Mittel sind jeweils durch dünne Filme von Polyethylen gebildet, die an der Innen- und/oder Außenfläche des schallabsorbierenden Materials angebracht oder ausgebildet sind. Das schallabsorbierende Material kann auch direkt an Innenwandflächen angebracht sein.

Aus der FR 2 876 172 A1 ist ein Luftkanal für das Belüftungssystem eines Kraftfahrzeugs bekannt, wobei der Luftkanal im Bereich seiner Wandung eine Mikroperforation in Form von einer Mehrzahl von Öffnungen aufweist. Außenseitig des mit der Mikroperforation versehenen Bereichs ist ein Absorbermaterial angeordnet. Außenseitig des Absorbermaterials ist eine flexible Abdeckung vorgesehen, welche das Absorbermaterial vollständig auf dessen Außenseite abdeckt. Die Abdeckung ist luftdicht, so dass keine Luft nach außen austreten kann.

Derartige Bauteile und Ausgestaltungen eines schallgedämpften Bereichs lassen noch Wünsche offen.

Ausgehend von diesem Stand der Technik ist es Aufgabe der Erfindung, ein verbessertes schallgedämpftes, gasführendes Bauteil zur Verfügung zu stellen. Diese Aufgabe wird gelöst durch ein Bauteil mit den Merkmalen des Anspruchs 1. Vorteilhafte Ausführungen sind Gegenstand der Unteransprüche.

Die Erfindung betrifft ein schallgedämpftes, gasführendes Bauteil, insbesondere Teil einer Kraftfahrzeug-Klimaanlage und/oder eines Kraftfahrzeug-Belüftungssystems, mit einem gasdichten Gehäuse und einem gasdurchlässigen Absorbermaterial, das direkt benachbart zu einem Bereich des Gehäuses angeordnet ist, wobei das Absorbermaterial in einer im Gehäuse ausgebildeten Aufnahme im Inneren des Bauteils angeordnet ist, zwischen dem Absorbermaterial und dem gasführenden Bereich des Bauteils eine innere Abdeckung angeordnet ist, die gasdurchlässig ist, und mindestens eine Öffnung in der Aufnahme ausgebildet ist, welche einen Durchlass für das Gas nach außerhalb des gasführenden Bauteils bildet. Bevorzugt sind im Unterschied zum Stand der Technik im Gehäuse selbst keine großflächigen Öffnungen vorgesehen, sondern das Gehäuse bildet vielmehr den äußeren und/oder seitlichen Bereich der Aufnahme für das Absorbermaterial. Dadurch, dass in der durch das Gehäuse gebildeten Aufnahme mindestens eine Öffnung vorgesehen ist, kann das Gas nach außen und somit durch das Absorbermaterial strömen. Somit wird das Absorbermaterial durchlüftet, und ein Ansammeln von Feuchtigkeit im Absorbermaterial, was insbesondere im Falle einer Verwendung des schalldämpfenden Bauteils als Teil einer Klimaanlage auf Grund hieraus resultierender Beeinträchtigung der Luftgüte in Folge von Schimmelpilzen, Mikroorganismen o.ä. unerwünscht ist, kann verhindert oder zumindest erschwert werden. Auch ist ein Ansammeln von Feuchtigkeit am Absorbermaterial in Folge einer Umströmung desselben ausgeschlossen oder zumindest vermindert.

Die Öffnung bzw. die Gesamtfläche der Öffnungen ist im Verhältnis zur Fläche der Aufnahme, die durch das Gehäuse gebildet wird, gering Sie liegt bevorzugt deutlich unter 50%, insbesondere unter 10% und besonders bevorzugt unter 5%, insbesondere unter 1% der Fläche der Aufnahme, die durch das Gehäuse gebildet wird. Dies stellt zudem sicher, dass der Luft- und Druckverlust nicht zu groß ist, und somit die Gebläseleistung nicht unnötig erhöht werden muss. In Folge des üblicherweise in einem derartigen, gasdurchströmten Bauteil vorhandenen Überdrucks wird ein Ansaugen von Umgebungsluft durch die Öffnungen verhindert. Ansonsten muss sichergestellt werden, dass durch die Öffnungen keine Beeinträchtigung des Gasstroms erfolgt, bspw. durch das Ansaugen schadstoffbelasteter Luft oder Luft mit hohem Feuchtigkeitsgehalt. Kann dies sichergestellt werden, so kann ggf. auch Luft von außerhalb gezielt durch die Öffnungen angesaugt werden, welche das Absorbermaterial durchströmt und dasselbe durchlüftet. Ein solches Ansaugen von Luft von außerhalb könnte beispielsweise im Ansaugbereich eines Gebläses einer Belüftungs-, Heizungs- oder Klimaanlage eines Fahrzeugs, insbesondere im Umluftansaugbereich.

Als Absorbermaterial kommen insbesondere bevorzugt offenzellige Schäume oder Fasermaterialien in Frage, welche direkt von Gas, d.h. insbesondere bevorzugt von Luft, durchströmt werden können. In diesem Fall können die Öffnungen von der inneren Abdeckung durch die Anordnung des Absorbermaterials räumlich getrennt sein. Wird als Absorbermaterial ein geschlossenzelliger Schaum oder ein anderes, nicht gasdurchströmbares Material verwendet, so muss eine Umströmung desselben sichergestellt sein, d.h. entsprechende Hohlräume und/oder Schlitze müssen zwischen der inneren Abdeckung und den Öffnungen vorgesehen sein.

Die Gestalt der Öffnungen ist nicht beschränkt. Besonders bevorzugt sind auf Grund der Herstellbarkeit kreisförmige oder schlitzförmige Öffnungen. Sind mehrere Öffnungen vorgesehen, so können dieselben gleichmäßig über die gesamte Fläche der Aufnahme, die durch das Gehäuse gebildet ist, verteilt angeordnet sein, jedoch sind auch gezielte Anhäufungen von Öffnungen in einem oder mehreren Bereichen möglich, beispielsweise wenn in Folge eines großen Temperaturgefälles in der Nachbarschaft des Bauteils auch im Bereich des Absorbermaterials zu Temperaturunterschieden kommt, so dass in einem Bereich das Ansammeln von Feuchtigkeit vermehrt auftritt und dieser aus diesem Grund verstärkt durchlüftet werden muss.

Die innere Abdeckung ist vorzugsweise hydrophob ausgebildet. Dies stellt sicher, dass keine Feuchtigkeit sich in diesem Bereich ansammelt und langsam in den Absorbermaterialbereich und/oder in den Innenraum des Bauteils eindringen kann. Somit wird zudem sichergestellt, dass sich keine oder nur unwesentlich Bakterien im Bereich der inneren Abdeckung ansiedeln, die zu unerwünschten Gerüchen führen können, welche über den Gasstrom, insbesondere den Luftstrom, bspw. einem Fahrzeuginnenraum zugeführt werden könnten.

Um Verwirbelungen o.ä. zu vermeiden, ist die innere Abdeckung vorzugsweise mit der Innenwandfläche des Bauteils fluchtend ausgebildet. Dies erübrigt oder erleichtert zudem eine Neuberechnung des schallgedämpften Bauteils, welches ein herkömmliches, nicht schallgedämpftes Bauteil ersetzen soll, in Bezug auf die strömungstechnischen Erfordernisse.

Die Aufnahme weist vorzugsweise Seitenwände und eine Außenwand auf, wobei die mindestens eine, insbesondere eine Mehrzahl von Öffnungen in einer oder mehreren Seitenwänden und/oder der Außenwand ausgebildet ist. Insbesondere bevorzugt sind Öffnungen in der Außenwand im Falle eines gasdurchströmbaren Absorbermaterials und in der oder den Seitenwänden im Falle eines nicht gasdurchströmbaren Absorbermaterials ausgebildet. Vorteilhafterweise sind die Seitenwände auch schrägverlaufend zur Außenwand und/oder fließend in diese übergehend ausgebildet. Weiter bevorzugt sind die Seitenwände und/oder die Außenwand ganz oder teilweise aus einem flexiblen und gasdichten Material, wie beispielsweise einem elastomeren Kunststoff gebildet.

Insbesondere bevorzugt ist mindestens ein Luftkanal durch das Absorbermaterial vorgesehen, welcher von der inneren Abdeckung in Richtung der Öffnungen, die insbesondere bevorzugt in der Außenwand ausgebildet sind, verläuft.

An der Außenfläche und/oder der Innenfläche des Bauteils zumindest im Bereich vor den Öffnungen ist vorzugsweise ein gasdurchlässiges Material in Form einer äußeren oder inneren Abdeckung angebracht. Diese äußere Abdeckung verhindert insbesondere das Eindringen von Schmutzpartikeln in das Absorbermaterial. Ferner kann sie - im Falle eines Ansaugens von Luft aus der Umgebung - die gleiche Funktion erfüllen, wie die innere Abdeckung, die zuvor beschrieben wurde. Bevorzugt wird die äußere oder innere Abdeckung durch ein textiles Vlies gebildet. Ebenso sind sonstige poröse Stoffe, insbesondere Kunststoffe denkbar.

Vorzugsweise liegt das Absorbermaterial zumindest bereichsweise flächig an der inneren Abdeckung an. Dies ermöglicht eine formschlüssige Aufnahme des Absorbermaterials in der Aufnahme, die durch die innere Abdeckung verschlossen ist. Eine zusätzliche Fixierung, welche ggf. mit einer Beeinträchtigung der Funktion des Absorbermaterials im Fixierungsbereich verbunden sein kann, kann entfallen.

Ferner kann - zumindest bereichsweise zwischen der inneren Abdeckung und dem Absorbermaterial - mindestens ein Hohlraum ausgebildet sein. Dieser Hohlraum verbessert das Durchlüftungsverhalten und die Verteilung der durchströmenden Luft.

Bevorzugt ist das Absorbermaterial durch eine Mehrzahl einzelner Absorberteile gebildet, wobei die einzelnen Absorberteile benachbart zueinander angeordnet sind, die Absorberteile unter Bildung eines absorbermaterialfreien Zwischenspalts in Außenbereichen miteinander in Kontakt sind. Hierfür sind die Absorberteile ausreichend eigenstabil ausgebildet, dass eine entsprechende Anordnung ohne ein Zusammenpressen derselben möglich ist. Insbesondere bevorzugt ist das Absorbermaterial in diesem Fall durch offenzellige Schäume gebildet.

Die innere Abdeckung ist vorzugsweise durch ein gasdurchlässiges Vlies, eine gasdurchlässige Platte, insbesondere eine Kunststoffplatte, die beispielsweise mikroperforiert sein kann, oder ein feines Gitter gebildet, wobei die innere Abdeckung mit der Innenwandfläche des Bauteils und/oder mindestens einer Seitenwand der Aufnahme verbunden ist, und die innere Abdeckung die Innenwandfläche des Bauteils im Bereich der Aufnahme fortführt. Die Fortführung der Innenwandfläche stellt sicher, dass in Folge der Anordnung eines Bereichs mit Absorbermaterial keine Beeinträchtigung des Gasstroms im Bauteil in Folge von Strömungswiderständen o.ä. erfolgt. Bevorzugt ist die Innenfläche der inneren Abdeckung möglichst glatt ausgebildet.

Bevorzugt ist die innere Abdeckung als Spritzgussteil, insbesondere als einstückiges Kunststoffspritzgussteil mit dem luftführenden Gehäuse ausgebildet.

Das Absorbermaterial ist vorzugsweise unter leichtem Zusammenpressen zwischen der Außenwand und der inneren Abdeckung aufgenommen. In diesem Fall können - bei entsprechender Eigenstabilität des Absorbermaterials - weitere Fixierungen entfallen. Die Oberfläche des Absorbermaterials kann dadurch unbeschädigt bleiben, was insbesondere im Falle offenzelliger Materialien hilfreich ist.

Die Aufnahme erstreckt sich bevorzugt über mindestens die Hälfte der Breite oder mindestens ein Viertel des Umfangs des Bauteils. Insbesondere bevorzugt erstreckt sich die Aufnahme über den gesamten Umfang oder die gesamte Breite des Bauteils.

Insbesondere im Falle komplizierter Geometrien der Innenwandfläche, bspw. bei einem Gebläse, kann im Absorbermaterial auch eine Stützstruktur für die innere Abdeckung vorgesehen sein. Somit lassen sich nahezu alle Formen von Innenwandflächen gasführender Bauteile durch gasdurchlässige Abdeckungen nachbilden. Der eigentliche Wandbereich des Gehäuses, an dem die Stützstruktur bevorzugt angebracht ist, kann gegebenenfalls vereinfacht ausgebildet sein, so dass in Einzelfällen sogar die Herstellungskosten gesenkt werden können. Besonders bevorzugt ist jedoch die Aufnahme für das Absorbermaterial in Form einer Vertiefung, also taschenartig, ausgebildet.

Besonders bevorzugt ist das Bauteil ein Teil eines Luftkanals, insbesondere eines Luftkanals einer Kraftfahrzeug-Klimaanlage oder eines Kraftfahrzeug-Belüftungssystems. Der Aufbau des gesamten Luftkanals kann modular sein, d.h. beispielsweise kann der Teil mit dem Absorbermaterial ein kleiner Abschnitt des gesamten Luftkanals sein, welcher - bei einer Ausführungsform - an Stelle eines herkömmlichen Rohres eingesetzt wird. Das einen Luftkanal bildende Bauteil kann beispielsweise auch das Gebläsegehäuse sein, wo beispielsweise die Zunge als in der Regel zur Verfügung stehender und kaum anders nutzbarer Bauraum zur Schalldämpfung geeignet ist.

Im Folgenden wird die Erfindung anhand mehrerer Ausführungsbeispiele, teilweise unter Bezugnahme auf die Zeichnung, im Einzelnen erläutert. Es zeigen:
- Fig. 1: einen schematisierten Schnitt durch einen schalldämpfenden Bereich eines luftführenden Bauteils gemäß dem ersten Ausführungsbeispiel,
- Fig. 2: einen schematisierten Schnitt durch einen schalldämpfenden Bereich eines luftführenden Bauteils gemäß dem zweiten Ausführungsbeispiel,
- Fig. 3: einen schematisierten Schnitt durch einen schalldämpfenden Bereich eines luftführenden Bauteils gemäß dem dritten Ausführungsbeispiel,
- Fig. 4: einen schematisierten Schnitt durch einen schalldämpfenden Bereich eines luftführenden Bauteils gemäß dem vierten Ausführungsbeispiel,

- Fig. 5: eine schematische Darstellung eines Absorberteils, welches gemeinsam mit einer Mehrzahl anderer, entsprechender Absorberteile in einer taschenartigen Aufnahme aufgenommen sein kann, und
- Fig. 6: eine schematische Ansicht eines Gebläses mit einem erfindungsgemäßen schaldämpfenden Bereich.

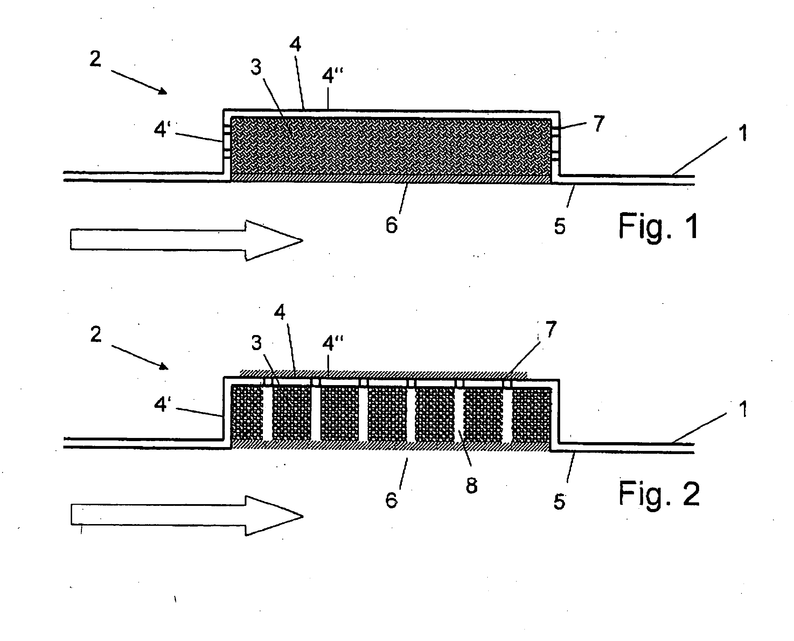

Gemäß dem ersten Ausführungsbeispiel ist ein luftführendes Gehäuse 1 aus Kunststoff mit einem beliebigen, beispielsweise im Wesentlichen kreisförmigen Querschnitt, von dem nur ein Teil in Fig. 1 dargestellt ist, mit einem schalldämpfenden Bereich 2 ausgebildet, in weichem zur Verringerung von Geräuschen ein Absorbermaterial 3 angeordnet ist. Als Absorbermaterial 3 dient vorliegend ein luftdurchlässiges Fasermaterial-Alternativ kann ein beliebiges anderes Absorbermaterial verwendet werden, bspw. ein offenzelliger, also luftdurchströmbarer Schaum. Auch sind geschichtet angeordnete, unterschiedliche Absorbermaterialien möglich.

Das Gehäuse 1 ist im schalldämpfenden Bereich 2 derart ausgebildet, dass eine taschenartige Aufnahme 4 mit vorliegend senkrecht zur Gehäuseinnenwand 5 verlaufenden Seitenwänden 4' und einer parallel zur Gehäuseinnenwand 5 verlaufenden Außenwand 4" für das Absorbermaterial 3 ausgebildet ist. Die Gehäuseinnenwand 5 ist in Form einer hydrophoben, luftdurchlässigen, inneren Abdeckung 6, vorliegend in Form eines textilen Vlieses, ausgebildet, so dass die Innenwandfläche in Bezug auf die Luftführung nicht oder nur unwesentlich unterbrochen ist, und dadurch Verwirbelungen etc. vermieden werden und die eigentliche Funktion des Gehäuses 1 nicht beeinträchtigt wrid. Zumindest die Fläche des Vlieses, welche die Innenwandfläche bildet, ist möglichst glatt ausgebildet, so dass kein Staub o.ä. oder zumindest nur eine minimale Menge an Staub im Bereich der Innenwandfläche aufgenommen und gespeichert werden kann.

Ferner sind, wie aus Fig. 1 ersichtlich, in den Seitenwänden 4' der taschenartigen Aufnahme 4 mehrere Öffnungen 7 vorgesehen, so dass die Luft in einer begrenzten Menge aus dem luftführenden Gehäuse 1 unter Durchströmen der inneren Abdeckung 6 und des Absorbermaterials 3 durch diese Öffnungen 7 austreten kann, d.h. das Absorbermaterial 3 wird von Luft durchströmt, also belüftet, so dass sich im Absorbermaterial 3 keine Feuchtigkeit ansammeln und es zu unerwünschten Gerüchen sowie im Extremfall zu einer Beeinträchtigung der Funktion der Schalldämpfung in Folge der sich sammelnden Flüssigkeit im Absorbermaterial kommen kann.

Von außen her - oder ggf. auch als Auslage der taschenartigen Aufnahme - kann gemäß einer Variante des ersten Ausführungsbeispiels eine luftdurchlässige zweite äußere Abeckung vorgesehen sein, um ein Eindringen von Schmutzpartikeln o.ä. zu verhindern. Im Falle großer Öffnungen kann diese äußere Abdeckung auch den austretenden Luftstrom begrenzen.

Gemäß dem zweiten Ausführungsbeispiel, welches in Fig. 2 dargestellt ist, ist ein Gehäuse 1 mit einem schalldämpfenden Bereich 2 ausgebildet, in welchem zur Verringerung von Geräuschen ein Absorbermaterial 3 angeordnet ist. Als Absorbermaterial 3 dient vorliegend ein offenzelliger, also luftdurchströmbarer Schaum. Alternativ kann ein beliebiges anderes Absorbermaterial verwendet werden, bspw. aus Fasern. Die taschenartige Aufnahme 4 ist in Bezug auf ihre Gestalt entsprechend der taschenartigen Aufnahme des ersten Ausführungsbeispiels ausgebildet.

Im Unterschied zum ersten Ausführungsbeispiel sind Öffnungen 7 nicht in den Seitenwänden 4' sondern in der Außenwand 4" ausgebildet. Diese Öffnungen 7 sind - entsprechend der zuvor beschriebenen Variante des ersten Ausführungsbeispiels - mit einer äußeren Abdeckung 6' von der Außenseite des Gehäuses 1 her abgedecket, wobei die äußere Abdeckung 6' durch ein luftdurchlässiges Vlies gebildet ist, das dazu dient, Schmutzpartikel am Eindringen in das Gehäuse 1 zu hindern. Selbstverständlich ist eine derartige äußere Abdeckung 6' nicht auf bestimmte Positionen der Öffnungen 7 beschränkt. So kann eine äußere Abdeckung beispielsweise auch bei dem in Fig.1 dargestellten Ausführungsbeispiel an den Seitenwänden 4' vorgesehen sein.

Ferner ist eine Mehrzahl von Luftkanälen 8 in Form von Bohrungen in dem Absorbermaterial 3 vorgesehen, welche gleichmäßig über den gesamten schalldämpfenden Bereich 2 verteilt senkrecht zur Außenwand 4" verlaufend angeordnet sind, und von den Öffnungen 7 in der Außenwand 4" bis zur inneren Abdeckung 6 verlaufen. Derartige Luftkanäle durch das Absorbermaterial verbessern die Durchlüftung desselben und verhindern daher das Ansammeln von Feuchtigkeit, welche zu unerwünschten Gerüchen und zu einer Beeinträchtigung der Funktion des schalldämpfenden Bereichs führen kann.

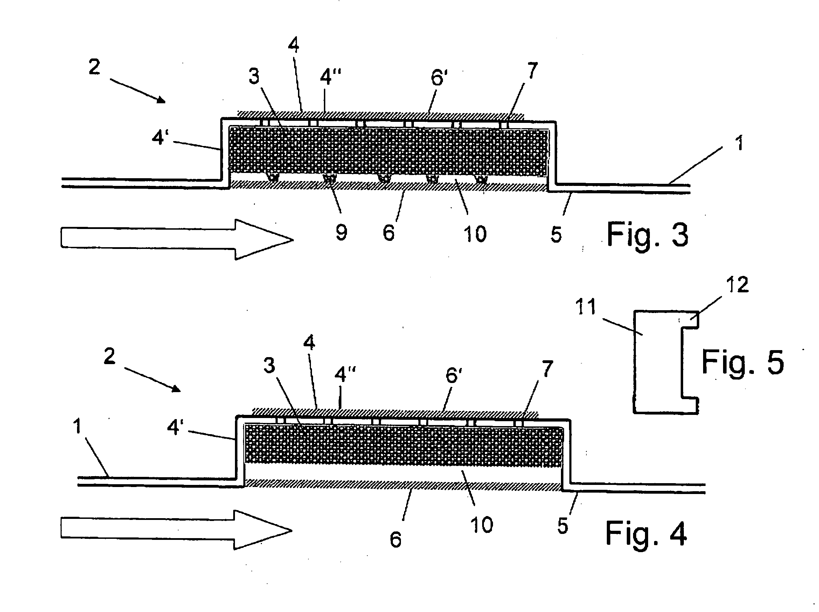

Das im Folgenden beschriebene und in Fig. 3 dargestellte, dritte Ausführungsbeispiel entspricht - soweit nachfolgend nicht ausdrücklich erwähnt - dem zweiten Ausführungsbeispiel. Im Unterschied zum zweiten Ausführungsbeispiel entfallen die Luftkanäle durch das Absorbermaterial 3. Ferner liegt das Absorbermaterial 3 nicht großflächig an der inneren Abdeckung 6 an, sondern es sind einzelne Kontaktbereiche 9 zwischen dem Absorbermaterial 3 und der inneren Abeckung 6 vorgesehen, zwischen denen Bereiche angeordnet sind, in denen die innere Abdeckung 6 und das Absorbermaterial 3 voneinander beabstandet sind. Vorliegend sind so Hohlräume 10 mit einer Höhe ausgebildet, die größer als die Materiafstärke der inneren Abdeckung 6 ist. Gemäß dem vorliegenden Ausführungsbeispiel verlaufen die Kontaktbereiche bandartig in Blickrichtung von Fig. 3. Alternativ können die Kontaktbereiche auch durch einzelne, bspw. kreisförmige Kontaktbereich gebildet sein. Beliebige andere Ausgestaltungen der Kontaktbereiche sind möglich, bspw. können die Hohlräume 10 punktartig verteilt über die Fläche verteilt angeordnet sein.

Fig. 4 zeigt das vierte Ausführungsbeispiel, welches im Wesentlichen dem dritten Ausführungsbeispiel entspricht, jedoch ist zwischen dem Absorbermaterial 3 und der inneren Abdeckung 6 kein Kontaktbereich ausgebildet. Vielmehr ist ein spaltförmiger Hohlraum 10 vorgesehen.

Fig. 5 zeigt ein Absorberteil 11, welches in einer Reihe mit entsprechenden Absorberteilen angeordnet, in eine taschenartige Aufnahme entsprechend den zuvor beschriebenen Ausführungsbeispielen aufgenommen sein kann, wobei die Innenwandfläche des Gehäuses wiederum durch eine innere Abdeckung fortgesetzt ist, welche die Absorberteile in der Aufnahme hält.

Das Absorberteil 11 besteht aus einem offenzelligen Schaum und hat eine quaderförmige Gestalt mit zwei an der Breitseite nach außen überstehenden Rippen 12. Die Enden der Rippen 12 sind im eingebauten Zustand des Absorberteils 11 in Anlage an das benachbarte Absorberteil, so dass zwischen den Absorberteilen 11 ein Hohlraum ausgebildet ist.

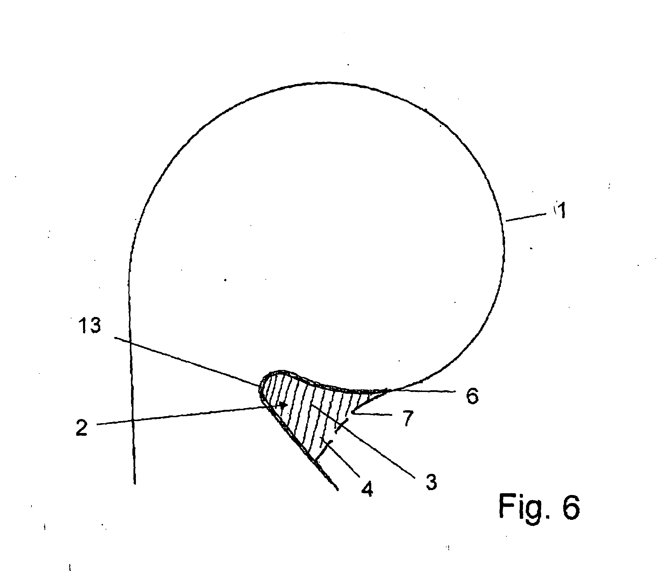

Fig. 6 zeigt ein Gebläsegehäuse, im Folgenden als Gehäuse 1 bezeichnet, wobei ein schalldämpfender Bereich 2 im Bereich der Zunge 13 ausgebildet ist, in welchem zur Verringerung von Geräuschen ein Absorbermaterial 3 angeordnet ist. Als Absorbermaterial 3 dient vorliegend ein luftdurchlässiges Fasermaterial. Die Innenwandfläche der Zunge 13 ist durch eine luftdurchlässige innere Abdeckung 6 ersetzt, die durch eine nicht näher dargestellte Rippenstruktur gestützt ist. Das Gehäuse 1 ist dahingehend "vereinfacht" ausgebildet, dass die entsprechende Wand zur Bildung einer Aufnahme 4 die Zunge 13 nicht nachbildet, sondern direkt zum trichterartigen Ansaugbereich geführt ist. Auf diese relativ eben ausgebildete Fläche ist die Rippenstruktur samt Absorbermaterial 3 und innerer Abdeckung 6 gesetzt. Im durch das Gehäuse 1 gebildeten Bereich der Aufnahme 4 ist eine Mehrzahl von Öffnungen 7 ausgebildet, deren Funktion in Bezug auf das Durchlüften des Absorbermaterials 3 anhand der vorhergehenden Ausführungsbeispiele beschrieben wurde.

Auch in diesem Fall kann das Absorbermaterial von der inneren Abdeckung beabstandet angeordnet sein, so dass zwischen der Abdeckung und dem Absorbermaterial ein Hohlraum ausgebildet ist. Im Falle eines nicht luftdurchlässigen Absorbermaterials sind entsprechend dem zweiten Ausführungsbeispiel Luftkanäle zu den Öffnungen im Gehäuse vorzusehen, um ein Umströmen des Absorbermaterials mit Luft zu ermöglichen.

### Bezugszeichenliste

- 1: Gehäuse
- 2: schalldämpfender Bereich
- 3: Absorbermaterial
- 4: taschenartige Aufnahme
- 4': Seitenwand
- 4": Außenwand
- 5: Gehäuseinnenwand
- 6: innere Abdeckung
- 6': äußere Abdeckung
- 7: Öffnung
- 8: Luftkanal
- 9: Kontaktbereich (innere Abdeckung - Absorbermaterial)
- 10: Hohlraum
- 11: Absorberteil
- 12: Rippe
- 13: Zunge

## Patentansprüche

1. Schallgedämpftes, gasführendes Bauteil einer Kraftfahrzeug-Klimaanlage und/oder eines Kraftfahrzeug-Belüftungssystems, mit einem gasdichten Gehäuse (1) und einem gasdurchlässigen Absorbermaterial, das direkt benachbart zu einem Bereich des Gehäuses (1) angeordnet ist, wobei das Absorbermaterial (3) in einer im Gehäuse (1) ausgebildeten Aufnahme (4), im Inneren des Bauteils angeordnet ist, wobei das Gehäuse (1) den äußeren Bereich der Aufnahme (4) bildet und zwischen dem Absorbermaterial (3) und dem gasführenden Bereich des Bauteils eine innere Abdeckung (6) angeordnet ist, die gasdurchlässig ist, **dadurch gekennzeichnet, dass** mindestens eine Öffnung (7) in der Aufnahme (4) ausgebildet ist, welche einen Durchlass für das Gas nach außerhalb des gasführenden Bauteils bildet.

2. Bauteil nach Anspruch 1, **dadurch gekennzeichnet, dass** die innere Abdeckung (6) hydrophob ausgebildet ist.

3. Bauteil nach Anspruch 1 oder 2, **dadurch gekennzeichnet, dass** die innere Abdeckung (6) mit der Innenwandfläche des Bauteils fluchtend ausgebildet ist.

4. Bauteil nach einem der vorhergehenden Ansprüche, **dadurch gekennzeichnet, dass** die Aufnahme (4) Seitenwände (4') und eine Außenwand (4") aufweist, wobei die mindestens eine, insbesondere eine Mehrzahl von Öffnungen (7) in einer oder mehreren Seitenwänden (4') ausgebildet ist.

5. Bauteil nach einem der vorhergehenden Ansprüche, **dadurch gekennzeichnet, dass** die Aufnahme (4) Seitenwände (4') und eine Außenwand (4") aufweist, wobei die mindestens eine, insbesondere eine Mehrzahl von Öffnungen (7) in der Außenwand (4") ausgebildet ist.

6. Bauteil nach Anspruch 5, **dadurch gekennzeichnet, dass** mindestens ein Luftkanal (8) durch das Absorbermaterial (3) vorgesehen ist, welcher von der inneren Abdeckung (6) in Richtung der Öffnungen (7) verläuft.

7. Bauteil nach einem der vorhergehenden Ansprüche, **dadurch gekennzeichnet, dass** an der Außenfläche und/oder der Innenfläche des Bauteils zumindest im Bereich vor den Öffnungen (7) ein gasdurchlässiges Material in Form einer äußeren und/oder inneren Abdeckung (6') angebracht ist.

8. Bauteil nach einem der vorhergehenden Ansprüche, **dadurch gekennzeichnet, dass** das Absorbermaterial (3) zumindest bereichsweise flächig an der inneren Abdeckung (6) anliegt.

9. Bauteil nach einem der vorhergehenden Ansprüche, **dadurch gekennzeichnet, dass** zumindest bereichsweise zwischen der inneren Abdeckung (6) und dem Absorbermaterial (3) mindestens ein Hohlraum (10) ausgebildet ist.

10. Bauteil nach einem der vorhergehenden Ansprüche, **dadurch gekennzeichnet, dass** das Absorbermaterial (3) durch eine Mehrzahl einzelner Absorberteile (11) gebildet ist, wobei die einzelnen Absorberteile (11) benachbart zueinander angeordnet sind, die Absorberteile (11) unter Bildung eines Hohlraums in Außenbereichen miteinander in Kontakt sind.

11. Bauteil nach einem der vorhergehenden Ansprüche, **dadurch gekennzeichnet**, die innere Abdeckung (6) durch ein gasdurchlässiges Vlies, eine gasdurchlässige Platte, insbesondere eine Kunststoffplatte, oder ein feines Gitter gebildet ist, wobei die innere Abdeckung (6) mit der Innenwandfläche des Bauteils und/oder mindestens einer Seitenwand (4') der Aufnahme (4) verbunden ist, wobei die innere Abdeckung (6) die Innenwandfläche des Bauteils im Bereich der Aufnahme (4) fortführt.

12. Bauteil nach einem der vorhergehenden Ansprüche, **dadurch gekennzeichnet, dass** die Aufnahme (4) sich über mindestens die Hälfte der Breite oder mindestens ein Viertel des Umfangs des Bauteils erstreckt.

13. Bauteil nach einem der vorhergehenden Ansprüche, **dadurch gekennzeichnet, dass** das Absorbermaterial (3) unter leichtem Zusammenpressen zwischen der Außenwand (4") und der inneren Abdeckung (6) aufgenommen ist.

14. Bauteil nach einem der vorhergehenden Ansprüche, **dadurch gekennzeichnet, dass** die Summe der Fläche aller Öffnungen in der Aufnahme (4) kleiner als 50%, insbesondere kleiner als 10%, insbesondere kleiner als 5%, der Fläche des Gehäuses (1) ist, welche die Aufnahme (4) bildet.

15. Bauteil nach einem der vorhergehenden Ansprüche, **dadurch gekennzeichnet, dass** im Absorbermaterial (3) eine Stützstruktur für die innere Abdeckung (6) vorgesehen ist.

16. Bauteil nach einem der vorhergehenden Ansprüche, **dadurch gekennzeichnet, dass** das Bauteil ein Luftkanal, insbesondere ein Luftkanal einer Kraftfahrzeug-Klimaanlage oder eines Kraftfahrzeug-Belüftungssystems, ist.

17. Bauteil nach einem der vorhergehenden Ansprüche, **dadurch gekennzeichnet, dass** das Gehäuse (1) ein Gebläsegehäuse ist, und dass das Absorbermaterial (3) im Bereich der Zunge (13) des Gebläsegehäuses vorgesehen ist.

18. Kraftfahrzeug-Klimaanlage und/oder Kraftfahrzeug-Belüftungssystem **gekennzeichnet durch** mindestens ein Bauteil gemäß einem der Ansprüche 1 bis 17.

## Claims

1. A noise-reduced, gas-bearing component of a motor vehicle air conditioner and/or of a motor vehicle ventilation system, comprising a gas-tight housing (1) and a gas-permeable absorber material, which is disposed directly adjacent to a region of the housing (1), the absorber material (3) being disposed in a holder (4), which is configured in the housing (1), on the inside of the component, and the housing (1) forming the outer region of the holder (4), and an inner cover (6), which is gas-permeable, being disposed between the absorber material (3) and the gas-bearing region of the component, **characterized in that** at least one opening (7) is configured in the holder (4) and forms a passage for the gas to outside of the gas-bearing component.

2. The component according to claim 1, **characterized in that** the inner cover (6) is designed to be hydrophobic.

3. The component according to claim 1 or 2, **characterized in that** the inner cover (6) is designed to be aligned with the inside wall surface of the component.

4. A component according to any one of the preceding claims, **characterized in that** the holder (4) comprises lateral walls (4') and an outside wall (4''), wherein at least one, and particularly a plurality of openings (7), is configured in one or more lateral walls (4').

5. A component according to any one of the preceding claims, **characterized in that** the holder (4) comprises lateral walls (4') and an outside wall (4''), wherein at least one, and particularly a plurality of openings (7), is configured in the outside wall (4'').

6. The component according to claim 5, **characterized in that** at least one air duct (8) extending through the absorber material is provided, which runs from the inner cover (6) in the direction of the openings (7).

7. A component according to any one of the preceding claims, **characterized in that** a gas-permeable material in the form of an outer and/or inner cover (6') is applied to the outside surface and/or the inside surface of the component, at least in the region in front of the openings (7).

8. A component according to any one of the preceding claims, **characterized in that** the absorber material (3) rests against the inner cover (6) in a planar fashion at least in some regions.

9. A component according to any one of the preceding claims, **characterized in that** at least one hollow space (10) is configured at least in some regions between the inner cover (6) and the absorber material (3).

10. A component according to any one of the preceding claims, **characterized in that** the absorber material (3) is formed by a plurality of individual absorber parts (11), wherein the individual absorber parts (11) are disposed adjacent to each other, and the absorber parts (11) have contact with each other to form a hollow space in the outside regions.

11. A component according to any one of the preceding claims, **characterized in that** the inner cover (6) is formed by a gas-permeable non-woven fabric, a gas-permeable plate, and particularly a plastic plate, or a fine grid, wherein the inner cover (6) is connected to the inside wall surface of the component and/or at least one lateral wall (4') of the holder (5), wherein the inner cover (6) extends the inside wall surface of the component in the region of the holder (4).

12. A component according to any one of the preceding claims, **characterized in that** the holder (4) extends over at least half the width or at least one quarter of the circumference of the component.

13. A component according to any one of the preceding claims, **characterized in that** the absorber material (3) is received between the outside wall (4'') and the inner cover (6) by slightly compressing it.

14. A component according to any one of the preceding claims, **characterized in that** the sum of the surfaces of all openings in the holder (4) is less than 50%, and particularly less than 10%, and most particularly less than 5% of the surface of the housing (1) that forms the holder (4).

15. A component according to any one of the preceding claims, **characterized in that** a supporting structure for the inner cover (6) is provided in the absorber material (3).

16. A component according to any one of the preceding claims, **characterized in that** the component is an air duct, and particularly an air duct of a motor vehicle air conditioner or of a motor vehicle ventilation system.

17. A component according to any one of the preceding claims, **characterized in that** the housing (1) is a fan housing and that the absorber material (3) is provided in the region of the tongue (13) of the fan housing.

18. A motor vehicle air conditioner and/or motor vehicle ventilation system, **characterized by** at least one component according to any one of claims 1 to 17.

## Revendications

1. Composant insonorise, fournissant du gaz, d'un système de climatisation d'un véhicule automobile et / ou d'un système de ventilation d'un véhicule automobile comprenant un carter (1) étanche au gaz et un matériau absorbant, perméable au gaz, qui est disposé directement à proximité d'une zone du carter (1), où le matériau absorbant (3) est disposé, à l'intérieur du composant, dans un logement (4) configuré dans le carter (1), où le carter (1) forme la zone extérieure du logement (4), et une protection intérieure (6) est disposée entre le matériau absorbant (3) et la zone du composant fournissant le gaz, laquelle protection est perméable au gaz,
**caractérisé en ce qu'**au moins une ouverture (7) est configurée dans le logement (4), ouverture qui forme un passage pour le gaz s'écoulant à l'extérieur du composant fournissant le gaz.

2. Composant selon la revendication 1, **caractérisé en ce que** la protection intérieure (6) est configurée en étant hydrophobe.

3. Composant selon la revendication 1 ou 2, **caractérisé en ce que** la protection intérieure (6) est configurée en étant alignée avec la surface de paroi intérieure du composant.

4. Composant selon l'une quelconque des revendications précédentes, **caractérisé en ce que** le logement (4) présente des parois latérales (4') et une paroi extérieure (4"), où l'ouverture au moins au nombre de un, en particulier une pluralité d'ouvertures (7), est configurée dans une ou plusieurs parois latérales (4').

5. Composant selon l'une quelconque des revendications précédentes, **caractérisé en ce que** le logement (4) présente des parois latérales (4') et une paroi extérieure (4"), où l'ouverture au moins au nombre de un, en particulier une pluralité d'ouvertures (7), est configurée dans la paroi extérieure (4").

6. Composant selon la revendication 5, **caractérisé en ce qu'**il est prévu, à travers le matériau absorbant (3), au moins un conduit d'air (8) qui s'étend en direction des ouvertures (7), à partir de la protection intérieure (6).

7. Composant selon l'une quelconque des revendications précédentes, **caractérisé en ce qu'**un matériau perméable au gaz, se présentant sous la forme d'une protection (6') extérieure et / ou intérieure, est fixé sur la surface extérieure et / ou la surface intérieure du composant, au moins dans la zone située en amont des ouvertures (7).

8. Composant selon l'une quelconque des revendications précédentes, **caractérisé en ce que** le matériau absorbant (3) s'applique sur la protection intérieure (6), au moins partiellement sur une grande étendue.

9. Composant selon l'une quelconque des revendications précédentes, **caractérisé en ce qu'**au moins un espace creux (10) est configuré, au moins partiellement, entre la protection intérieure (6) et le matériau absorbant (3).

10. Composant selon l'une quelconque des revendications précédentes, **caractérisé en ce que** le matériau absorbant (3) est formé par une pluralité de différentes parties absorbantes (11), où les différentes parties absorbantes (11) sont disposées en étant voisines les unes des autres, les parties absorbantes (11), en formant un espace creux, sont au contact les unes des autres dans des zones extérieures.

11. Composant selon l'une quelconque des revendications précédentes, **caractérisé en ce que** la protection intérieure (6) est formée par un tissu non tissé, perméable au gaz, par une plaque perméable au gaz, en particulier par une plaque en matière plastique ou bien par une fine grille, où la protection intérieure (6) est reliée à la surface de paroi intérieure du composant et / ou au moins à une paroi latérale (4') du logement (4), où la protection intérieure (6) continue, dans la zone du logement (4), la surface de paroi intérieure du composant.

12. Composant selon l'une quelconque des revendications précédentes, **caractérisé en ce que** le logement (4) s'étend sur au moins la moitié de la largeur du composant ou sur au moins un quart de la circonférence dudit composant.

13. Composant selon l'une quelconque des revendications précédentes, **caractérisé en ce que** le matériau absorbant (3) est placé, par légère compression, entre la paroi extérieure (4") et la protection intérieure (6).

14. Composant selon l'une quelconque des revendications précédentes, **caractérisé en ce que** la somme de la surface de toutes les ouvertures situées dans le logement (4) est inférieure à 50 %, en particulier inférieure à 10 %, en particulier inférieure à 5 % de la surface du carter (1), laquelle surface forme le logement (4).

15. Composant selon l'une quelconque des revendications précédentes, **caractérisé en ce qu'**il est prévu, dans la matériau absorbant (3), une structure support pour la protection intérieure (6).

16. Composant selon l'une quelconque des revendications précédentes, **caractérisé en ce que** le composant est un conduit d'air, en particulier un conduit d'air d'un système de climatisation d'un véhicule automobile ou d'un système de ventilation d'un véhicule automobile.

17. Composant selon l'une quelconque des revendications précédentes, **caractérisé en ce que** le carter (1) est un carter de soufflante, et **en ce que** le matériau absorbant (3) est prévu dans la zone de la languette (13) du carter de la soufflante.

18. Système de climatisation d'un véhicule automobile et / ou système de ventilation d'un véhicule automobile **caractérisé par** au moins un composant selon l'une quelconque des revendications 1 à 17.
